# EUROPEAN PATENT APPLICATION

(11) **EP 4 756 274 A1**
(43) Date of publication of application: **10.06.2026**
(21) Application number: 24218239.2
(22) Date of filing: 09.12.2024
(51) Int. Cl.: F16L 5/04

(54) **THERMAL BREAK IN A STEEL HOUSING FOR A FIRESTOP THROUGH PENETRATION DEVICE PREFORMED TO BE INSTALLED IN A FIREWALL**

(71) Applicant: Hilti Aktiengesellschaft, 9494 Schaan (LI)
(72) Inventor: Voss, Brendan, 80798 München (DE); Belz, Anja, 86916 Kaufering (DE); Haas, Simon, 80798 München (DE); Juli, Stefan, 6713 Ludesch (AT)
(74) Representative: Hilti Aktiengesellschaft Corporate Intellectual Property

(57) **Abstract**

The invention relates to a housing (1) for a firestop through penetration device (10), wherein
- the housing (1) is preformed to be installed in a breakthrough of a firewall, so as to form a side wall of an axial channel having opposite openings (2, 3) to both sides of the firewall and configured to receive penetrants;
- the housing (1) is at least partly metallic; and
- in any longitudinal intersecting plane taken along the axial direction of the housing (1), each heat conduction path formed by metallic parts of the housing (1) is interrupted at least once between the opposite openings (2, 3) of the housing (1) by a thermal break.

## Description

### Field of the invention

The invention relates to a housing for a firestop through penetration device. The housing is preformed to be installed in a firewall and to form a side wall of an axial channel with opposite openings to both sides of the firewall, so that a conduit feedthrough for cables, pipes and the like may be created in the firewall by using the device.

### Description of the prior art

Firestop through penetration devices in various designs are known in the art. They may, inter alia, be available in a preformed configuration, which is more or less ready to be installed in a firewall breakthrough.

As an example, US 8,833,478 B2 discloses a fire stop system with a pass-through device which may be installed around a bundle of cables in a structural opening. The system comprises a housing shaped as a pipe split along its longitudinal axis, so as to be opened and closed during the installation. The split pipe has a first end and a second end, wherein the first end and the second end have an intumescent material installed thereon for sealing the split pipe when exposed to elevated temperatures. The system further comprises a foam wall gasket installed around the split pipe adjacent the structural opening, wherein the foam wall gasket forms a contour to the structural opening blocking air flow between the split pipe and the opening; an annulus plate covering the foam wall gasket, wherein the annulus plate is positioned around the split pipe at the structural opening; and pie foam disks installed on the intumescent material at the first end and the second end of the split pipe, wherein the pie foam disks have a plurality of slots forming a plurality of triangular shaped sections.

One requirement of firestop through penetration devices within a firewall is to provide a certain level of insulation protection in case of fire. For example, a temperature-based level of insulation protection, also known as a temperature rating, ensures that the temperature measured on the device during an official fire test does not exceed a threshold of 180K for some period of time, typically 30, 60, 90, or 120 minutes. Higher temperature ratings, required for some applications, are often difficult to achieve with preformed fire stop through penetration devices, as the body of these devices is typically made of or constructed from steel, that provides the desired mechanical properties for the function of the device but also provides a conductive pathway for heat to be transferred from the fireside of the wall to the cold side, where the temperature is measured.

Current state of the art for achieving higher temperature ratings on preformed fire stop through penetration devices with a metallic housing is to apply an additional layer of insulation to the exterior of the device, where the temperature measurements are taken, thus preventing the measured temperature from increasing too rapidly. A downside of this state of the art is the additional effort and cost associated with materials and installation of an additional layer of insulation on a device, which was constructed and sold as a preformed device and, hence, is expected to require only low effort to install, this property being an important part in the value assessment of the device. Typical insulation materials used in those cases include, but are not limited to; mineral wool, fire stop putty, or a specific high-temperature endothermic mat available under the trade name CFP-ES Endo-Shield (Hilti) and usable as firestop collars, wraps and bandages.

### Summary of the invention

To solve the above-mentioned problems, a housing for a firestop through penetration device and a corresponding firestop through penetration device are provided as defined in the independent claims. Further embodiments are specified in the dependent claims. Any feature or technical effect described herein for the housing correspondingly applies to the device, and vice versa.

According to a first aspect, a housing for a firestop through penetration device is provided. The housing is preformed so as to be installed in a breakthrough of a firewall (which may be a wall or a floor in a building or a facility) and to form a side wall of an axial channel having opposite openings to both sides of the firewall and configured to receive penetrants, such as cables or wires, pipes and the like. The housing is at least partly metallic, i.e. made of or constructed from one or more metals and/or metal alloys, such as steel etc. The whole firestop through penetration device will be described below and further includes a fire seal arranged within the housing such as to surround the penetrants, which may be inserted in the channel, and to seal the channel to a required level.

In order to achieve higher temperature ratings than it is known from conventional devices of this type, in any possible longitudinal intersecting plane taken along the axial direction of the housing, each heat conduction path formed by metallic parts of the housing is interrupted at least once between the opposite openings of the housing by a thermal break. Herein, an axial direction of the housing is a direction parallel to its longitudinal axis, which coincides with the above-mentioned channel axis. A thermal break may, for example, include an air gap and/or a section made of any material whose thermal conductivity and/or melting point is significantly lower than that of steel or other metals or metal alloys used in the metallic parts of the housing.

In other words, the housing is free of metallic heat conduction paths connecting the opposite openings of the housing/channel in its axial direction, i.e. completely lying in at least one longitudinal intersecting plane. Instead, any path formed by the proposed housing between its opposite openings in one of its longitudinal intersecting planes (also denoted herein as "an axial path") is either completely interrupted (and, thus, does not connect the opposite openings) or contains a section made of non-metallic materials having no or only a low thermal conductivity, at least once along each axial path. Geometrically, an axial path of the housing may form a straight line, for instance, if the shape of the housing (as seen in its cross-section) stays constant along its axial direction. If, however, the shape of the housing varies in its axial direction, an axial path of the housing will have a corresponding geometry, which also may be different from a straight line and include, for example, bumps, curves, or corners.

In particular, the whole housing or at least a major part of it may be metallic, for instance, to achieve a particular mechanical stability. The term "major part of the housing" may refer to its geometrical dimensions and, for example, mean at least 50%, specifically at least 60% or 70%, preferably at least 80 % and most preferably at least 90% of a total outer surface or, alternatively, of a total axial length of the housing.

The housing may, in particular, be shaped as a tube (also denoted as a pipe or a sleeve) having a circular, oval, rectangular, square, triangular or any other suitable shape of cross-section. The housing (as well as the whole firestop through penetration device, which is described further below and includes a fire seal arranged in the housing and sealing the channel in case of fire) may, in particular, be preformed such as to be readily (i.e. not requiring specific professional skills or much effort; in other words, easily) installed in a horizontal breakthrough in a wall or a vertical breakthrough in a floor, such as, for example, known from the related art cited at the outset.

The proposed design of the housing provides an improved insulation protection or temperature rating for metal-based preformed firestop through penetration devices without the necessity to add extra insulation material to the device during installation. In particular, no additional installation of insulation material layers outside the housing are required to achieve a desired temperature level, due to the proposed design of thermal break(s), according to which any metallic heat conduction path found in any longitudinal intersecting plane of the housing is interrupted at least once between its opposite openings by a thermal break.

Specifically, though not necessarily, the proposed thermal break(s) may at least partly be arranged in a central or mid-distance section (in the sense of a region, or portion) of the housing with respect to its axial dimension. Such a central or mid-distance section may extend in the axial direction of the housing over a predetermined length of, by way of example only, a quarter, a sixth, an eighth, or a tenth of the total axial length of the housing. The thermal break(s) may be formed in any part of such a central or mid-distance section. In other words, this embodiment is not limited to an exactly central or centrally symmetrical arrangement of the thermal break(s). It only means that at least a part of the thermal break(s) is/are found closer to the centre than to the opposite openings of the housing in its axial direction. Thereby, for example, the effectivity of thermal separation of the opposite openings may be increased.

According to a first embodiment, at least one of the thermal breaks is formed by a non-metallic axial segment which has a predetermined axial length and is arranged between two metallic axial segments of the housing, so that the two metallic axial segments are thermally separated from each other as a whole by the non-metallic axial segment of the housing. In other words, the two metallic axial segments of the housing are formed completely separately from each other and are arranged at an axial distance from one another, which is given by the total length of the non-metallic axial segment. Thereby, a very effective thermal separation of the opposite openings of the housing may be achieved. As a material of the non-metallic axial segment, a material with a significantly lower thermal conductivity and/or melting point than that of the metal(s) or metal alloy(s) used in the metallic parts of the housing may be selected, such as, by way of example only, plastics.

According to an alternative second embodiment (which, basically, may also be combined with the first embodiment in one and the same or in different axial sections of the housing), at least some of the thermal breaks are formed by a plurality of slots which are formed and arranged in a metallic part of the housing in such a manner that any heat conduction path found in some longitudinal intersecting plane of this metallic part is interrupted at least once between the opposite openings of the housing by one or more of these slots. Therefore, in this embodiment, even if metallic heat conduction paths connecting the opposite openings of the housing exist, their lengths are always significantly longer as the axial length of the housing. This embodiment may also have further advantages in terms of the complexity/simplicity of the manufacturing and/or alignment process, as well as in terms of mechanical stability of the housing and of the whole device, since the housing may be substantially manufactured as a one-peace part.

In particular, said plurality of slots may comprise two or three lines extending, at least partly, in a circumferential direction of the housing (i.e. in a direction around its longitudinal axis) and being successively arranged in its axial direction. In other words, the lines are arranged one after another, when seen in the axial direction of the housing. Here, each line is formed by a plurality of slots which extend at least partly in its direction. The length of each slot significantly exceeds its width, e.g. by many times, so that the slots a clearly distinguished from simple holes or perforations. Furthermore, in order to achieve the functionality proposed above, the slots of one of said lines are offset in the circumferential direction of the housing with respect to the slots of at least one of the other lines, so that any line/path drawn in said metallic part of the housing strictly in its axial direction is interrupted by at least one of these slots.

For example, at least one of these lines of slots may lie in a plane oriented transversely or, in particular, perpendicularly to the longitudinal axis of the channel and of the housing. This is, of course, not necessary. Such a line of slots may, for example, also be curved to some degree out of a respective plane. Furthermore, said at least two successive lines of slots may also be formed by successive windings of one and the same helix and the like wound around the longitudinal axis of the housing. Lines of slots extending in an approximately perpendicular direction relative to the axis of the channel/housing may, for instance, be easier to manufacture. On the other hand, orienting prolonged slots and lines of slots at an angle of e.g. about 25°-45° from the cross-sectional (or, alternatively, from the axial) direction, may also have advantages, for instance, in terms of weight, material consumption and/or mechanical stability of the housing. (Herein, the expressions "approximately" or "about" may, in particular, be understood as allowing possible or indispensable manufacturing or constructional tolerances of up to 10% of a concerned linear or angular dimension. It is, however, understood by a skilled person that also any other geometrical term, such as "circular or square cross-section", if it is used to describe geometrical shapes of the parts to be manufactured, is not meant as limiting their scope to a mathematically precise geometrical shape and, instead, always includes possible or indispensable manufacturing and constructional tolerances.)

Specifically, in at least one of said lines, each slot may be at least twice, preferably at least three to five times and most preferably at least five to ten times, as long as the distance between the successive slots (to both sides in the respective line direction). Here, both the slot length and the distance between the slots are measured in the direction of the respective line.

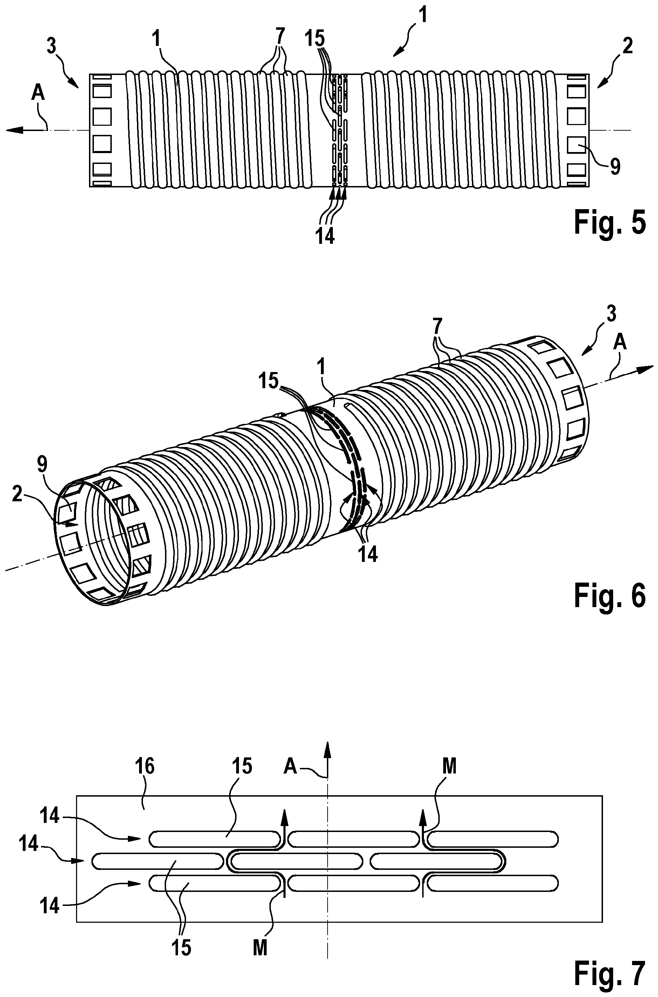

Thereby, the lengths of possible metallic heat conduction paths connecting the opposite openings of the housing are further increased in comparison to the axial length of the housing, thus further reducing the thermal conduction of the housing (as illustrated, by way of example only, in Figs. 5-7).

Still more specifically, when considered in an orthogonal projection onto a cross-sectional plane (i. e. in a vertical projection onto a plane vertically oriented to the channel axis), the slots of at least one of these lines may overlap the slots of at least one of the other lines (preferably, of each directly successive line) by at least a half of their respective slot lengths measured in the respective line direction. Alternatively or additionally, the slots of at least one of these lines may be offset in the respective line direction by at least a quarter, and preferably at least a third, of their lengths relatively to the slots of another one of these lines (preferably, of each directly successive line). Both is illustrated, by way of example only, in Figs. 5-7. Thereby, the lengths of possible metallic heat conduction paths connecting the opposite openings of the housing are still further increased.

In the housing as proposed herein, gaps or voids generated in the metallic part(s) by the proposed interruptions of metallic heat conduction paths may specifically, though not necessarily, be at least partly filled or replaced by another material. To this aid, basically, any non/less conductive (or non-metallic) material which has suitable mechanic properties under normal conditions and a significantly lower thermal conductivity and/or a significantly lower melting point than that of metal(s) or metal alloy(s) used in the housing may be selected, such as plastics etc. The non/less conductive material may, for example, be attached to the metallic housing parts, which are separated or reduced for creating a thermal break as proposed herein, by using a number of different methods and means, including, but not limited to: press interference fitment, tab and slot attachment, or injection overmolding etc.

As a further aspect, a firestop through penetration device preformed to be installed in a firewall and to create a conduit feedthrough is provided. The device comprises a housing proposed herein and a fire seal arranged in the housing and configured to surround penetrants (such as cables or wires, pipes and the like), which may be inserted in the channel. The fire seal is configured to seal the channel - at least in the event of fire - against smoke and/or flames and/or liquids in any suitable manner as, for example, known in the art. To this end, for example, strips or sheets of an intumescent material, foam, fire-resistant fabrics etc. may be used. The housing of the device may be secured to the firewall by any suitable means, such as, for example, known in the art and including, by way of example only, cast-in methods and/or fixing flanges with bolts and sealing gaskets etc. Preferably, the firestop function of the through penetration device is provided both with and without penetrants received in the channel.

In particular, the firestop through penetration device proposed herein may be preformed such as to be readily installed in a firewall, thereby providing a predefined level of insulation protection in case of fire, such as mentioned at the outset or, if required, also higher, without a need for additional insulation material and measures, such as adding insulation layers to the exterior of the housing and/or filling the housing with plaster inside, as known from the related art.

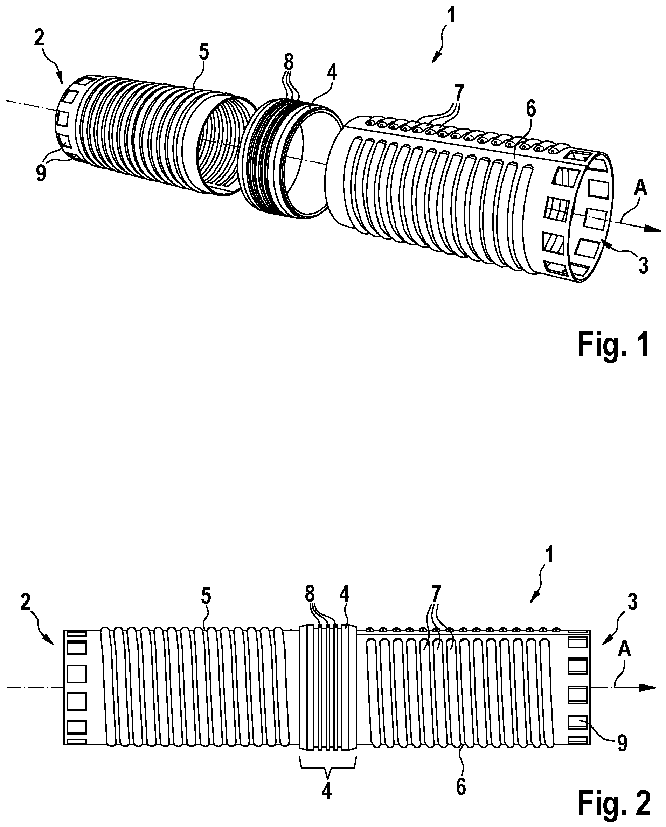

So, for example, preliminary test results of a device available under the trade name CP-653 (by Hilti, the device being e.g. similar to the one disclosed in US 8,833,478 B2, cited at the outset), after the device was modified, e.g. as illustrated in the attached drawings (Fig. 1 - Fig. 3), by a complete separation of the two opposite sides (openings) of the metal housing and a replacement of a resulting intermediate axial segment with a plastic material, showed a temperature rating improvement of 60 minutes up when compared to an unmodified device in the same test. Initial test results were conducted using a through penetration device having a round or circular cross-section, most of the attached diagrams illustrating this specific application of the proposed innovation. However, the innovation proposed herein can be applied in an analogous manner to any other through penetration device with a housing made of metal.

### Brief description of the drawings

The above-described aspects of the invention as well as their specific design variations will be further explained in the following with reference to the attached schematic drawings. Even though the drawings may also be seen as true to scale, this is not to be understood as limiting: Each drawing mainly serves as a schematic illustration of basic principles of the present invention.
- Fig. 1: is an exploded perspective view of a housing for a firestop through penetration device according to an exemplary embodiment with a plastic thermal break in its centre and a circular cross-section;
- Fig. 2: is a side view of the housing of Fig. 1 in its assembled state;
- Fig. 3: is a perspective view of the housing of Fig. 1 in its assembled state;
- Fig. 4: is a perspective view of a firestop through penetration device according to another exemplary embodiment with a plastic thermal break in the centre of its housing which has a rectangular cross-section;
- Fig. 5: is a side view of a housing for a firestop through penetration device according to a still further ex- emplary embodiment, the housing having offset slots in its centre and a circular cross-section;
- Fig. 6: is a perspective view of the housing of Fig. 5; and
- Fig. 7: is a plan view of a cut-out of an exemplary metal material sheet, illustrating a significantly enlarged length of heat conduction paths existing in a housing according to an embodiment with offset slots.

### Detailed description of exemplary embodiments of the invention

Any of the different embodiments, variations and specific features of the housing and the firestop through penetration device according to the above aspects of the invention, which are mentioned in the above description or in the following claims, may be implemented in the exemplary embodiments shown in Figures 1 through 7 additionally or alternatively, if not already included therein. Therefore, to avoid unnecessary repetitions, not all of them will be explicitly mentioned again with reference to the drawings. The same also applies to the definitions and technical effects already specified above with reference to the individual features, which are illustrated in the Fig. 1-7.

As already mentioned further above, the invention provides an improved insulation protection or temperature rating for preformed firestop through penetration devices having a metallic housing, without the necessity to add extra insulation material to the device during installation.

According to a first embodiment, which is described in more detail further above and is merely by way of non-limiting examples illustrated in Figs. 1-4, this is achieved by completely separating one side of the metal housing of the device from the other, thereby effectively creating a thermal break in the device. According to a second embodiment, which is described in more detail further above and is merely by way of non-limiting examples illustrated in Figs. 5-7, it is also possible to achieve the result by removing metal material e.g. from the centre of the housing so as to effectively reduce or impede conduction of heat from one side of the device to the other by rows (also denoted herein as "lines") of slots that are offset relative to each other. Here, the idea is to create a significantly longer pathway for heat conduction and, thereby, to effectively impede heat transfer through to the cold side of the wall, as illustrated in Fig. 7.

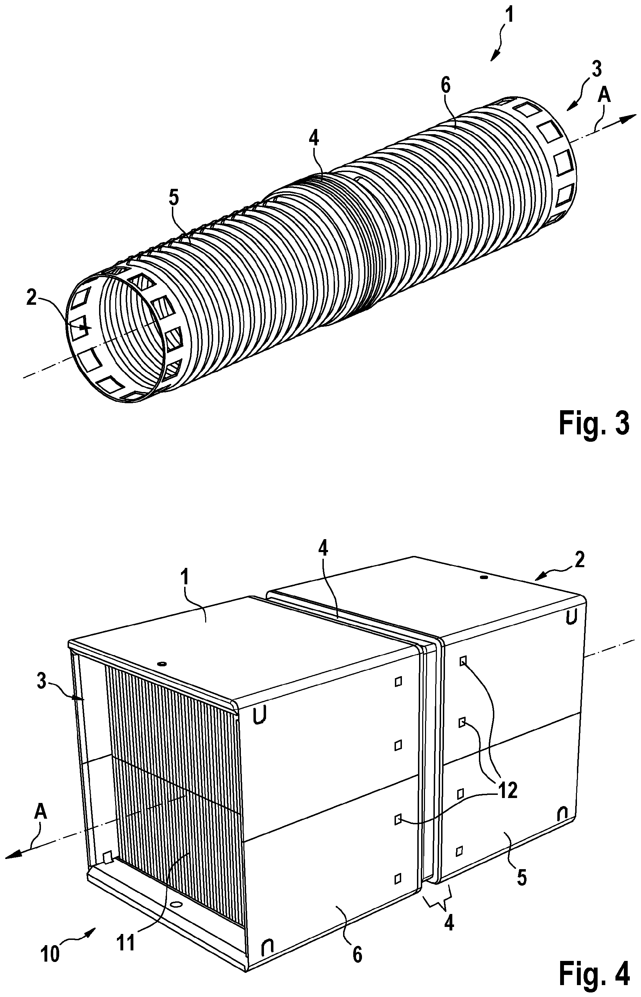

Specifically, or in a preferable configuration, the gap(s) left in the device housing created by this separation or material remove are then filled with less or non-conductive material, or material that melts away at lower temperatures and, thereby, effectively prevents heat conduction in case of fire, such as plastics (not explicitly depicted in Figs. 5-7). This material helps to restore any mechanical strength or other properties, which may be lost by removing the metal material. The non/less conductive material can, for example, be attached to the separated or reduced metal housings in a number of different ways, such as by press interference fitment (as, for example, indicated in Figs. 1-4) and/or tab and slot attachment (as, for example, indicated in Fig. 4), or by injection overmolding.

Further details will be described in the following with reference to the individual Figures:
Fig. 1 shows an exploded perspective view of a housing 1 for a firestop through penetration device according to an exemplary embodiment of the invention. The housing 1 is preformed to be installed in a breakthrough of a firewall (not depicted) and to form a side wall of an axial channel with a longitudinal axis A and opposite openings 2 and 3 to both sides of the firewall, so that penetrants (not depicted) can be received in the channel, thus creating a conduit feedthrough. By way of example only, the housing 1 of Fig. 1 has a circular (or round) cross-section.

In this example, the housing 1 comprises a plastic thermal break segment 4 arranged centrally in the axial direction between two metallic axial segments 5 and 6 made, for example, of steel. As already mentioned above, the axial direction of the housing 1 is a direction parallel to the longitudinal axis A of the housing 1 and of the channel created thereby.

As evident from the exploded view according to Fig. 1, the metallic axial segments 5 and 6 are formed completely separately from each other. They can optionally comprise a sequence of circumferential ribs 7, successively arranged in the axial direction, which may, for instance, increase a mechanical stability of the housing 1 and/or increase the length of heat conducting paths in the axial direction. Similarly, the thermal break segment 4 may optionally comprise circumferential ribs 8. Finally, recesses 9 and/or other fixing means, such as flanges etc., may be formed close to the opposite openings 2 or 3 of the housing 1, which may be used to secure a fire seal (not depicted) of the final firestop through penetration device inside the housing 1 and/or to secure the device to the firewall.

Fig. 2 further shows a side view of the housing 1 of Fig. 1 in its assembled state.

Fig. 3 depicts another perspective view of the housing 1 of Fig. 1 in its assembled state.

As mentioned further above, preliminary test results or a firestop through penetration device, such as available under the trade name CP-653 (by Hilti, the device being e.g. similar to the one disclosed in US 8,833,478 B2, cited at the outset), after the housing of this device was modified as illustrated in Fig. 1 - Fig. 3 by a complete separation of the two opposite sides (or openings 2 and 3) of the metallic housing 1 and a replacement of an intermediate axial segment with a plastic material, showed, as a result of this modification, a temperature rating improvement (i.e. an increase) of 60 minutes, when compared to an unmodified device in the same test. These initial tests were conducted using a through penetration device having a round cross-section, such as illustrated in Figs. 1-3. However, the innovation can be applied in the same way to any other through penetration device with a housing made of metal, such as, for example, shown in Fig. 4:

Fig. 4 shows a perspective view of a firestop through penetration device 10 according to another exemplary embodiment with a plastic thermal break in the centre of its housing 1. Within its housing 1, the device 10 includes a fire seal 11, which is configured to surround penetrants (not depicted), which may be inserted in the channel, and to seal the channel, at least in the event of fire, against smoke and/or flames. To avoid repetitions, in the following, only the differences to Figs. 1-3 will be described:

So, in the example shown in Fig. 4, the housing 1 has a rectangular, in particular square, cross-section. Further, circumferential ribs 7 and 8 are optionally omitted in its metallic axial segments 5 and 6 and in its plastic thermal break segment 4, which is arranged centrally therebetween. Besides, as already mentioned above, tab and slot attachments 12 are recognizable in Fig. 4, securing the plastic thermal break segment 4 to the two metallic axial segments 5 and 6.

Figs. 5 and 6 show, respectively, a side view and a perspective view of a housing 1 for a firestop through penetration device according to a further exemplary embodiment of the invention. To avoid repetitions, only the differences of this embodiment from the one described above with reference to Figs. 1-3 will be described in the following:

So, in this example, a thermal break is formed in a central section (with respect to the axial direction) of the metallic housing 1 by two or more lines 14 (by way of example only, three lines 14 in Fig. 5-7) of lengthy slots 15, which are offset from line 14 to line 14 in a circumferential direction of the housing 1 in such a manner, that any heat conduction path lying in some longitudinal intersecting plane of the housing 1 taken along its axial direction (i. e. any axial heat conduction part found in the housing 1) is interrupted between the opposite openings 2 and 3 by at least one slot 15. As a result, the length of any metallic heat conduction path M (cf. Fig. 7) connecting the opposite openings 2 and 3 of the housing 1 is much longer that the axial length of the housing 1. Thereby, the thermal conduction by the metallic housing 1 is effectively reduced.

Fig. 7 shows a plan view of a cut-out of an exemplary metal material sheet 16, illustrating a significantly enlarged length of any heat conduction path M existing in a housing 1 which is constructed using this metal material sheet 16 according to an embodiment with offset slots, such as e.g. shown in Figs. 5-6.

## Claims

1. A housing (1) for a firestop through penetration device (10), wherein
- the housing (1) is preformed to be installed in a breakthrough of a firewall, so as to form a side wall of an axial channel having opposite openings (2, 3) to both sides of the firewall and configured to receive penetrants;
- the housing (1) is at least partly metallic; and
- in any longitudinal intersecting plane taken along the axial direction of the housing (1), each heat conduction path formed by metallic parts of the housing (1) is interrupted at least once between the opposite openings (2, 3) of the housing (1) by a thermal break.

2. The housing (1) according to claim 1, wherein
- said thermal break(s) is/are at least partly arranged in a central or mid-distance section of the housing (1) with respect to its axial dimension.

3. The housing (1) according to claim 1 or 2, wherein
- at least one of said thermal breaks is formed by a non-metallic axial segment (4) having a predetermined axial length and arranged between two metallic axial segments (5, 6) of the housing (1), so that the two metallic axial segments (5, 6) are thermally separated from each other as a whole by said non-metallic axial segment (4) of the housing (1).

4. The housing (1) according to one of the preceding claims, wherein
- at least some of said thermal breaks are formed by a plurality of slots (15) which are formed and arranged in a metallic part of the housing (1) in such a manner that any heat conduction path found in said longitudinal intersecting planes of this metallic part is interrupted at least once between the opposite openings (2, 3) of the housing (1) by one or more of said slots (15).

5. The housing (1) according to claim 4, wherein
- said plurality of slots (15) comprises at least two lines (14) extending at least partly in a circumferential direction of the housing (1) and successively arranged in its axial direction;
- each line (14) is formed by a plurality of slots (15) extending at least partly in its direction; and
- the slots (15) of one of said lines (14) are offset in the circumferential direction of the housing (1) with respect to the slots (15) of at least one of the other lines (14), such that any axial path in said metallic part of the housing (1) is interrupted by at least one of these slots (15).

6. The housing (1) according to claim 5, wherein
- in at least one of said lines (14), each slot (15) is at least twice, preferably at least three to five times and most preferably at least five to ten times, as long as the distance between the successive slots (15), both being measured along the respective line (14).

7. The housing (1) according to claim 6, wherein
- in an orthogonal projection onto a cross-sectional plane, the slots (15) of at least one of these lines (14) overlap the slots (15) of at least one of the other lines (14) by at least a half of their respective slot lengths measured in the respective line direction; and/or
- the slots (15) of at least one of these lines (14) are offset in the respective line direction by at least a quarter, preferably at least a third, of their lengths relatively to the slots (15) of another one of these lines (14).

8. The housing (1) according to one of the preceding claims, wherein
- one or more gaps or voids generated in a metallic part of the housing (1) due to said interruptions of its metallic axial heat conduction paths is/are at least partly filled or replaced by a material having a significantly lower thermal conductivity and/or melting point than the metal(s) or metal alloy(s) this part is made of.

9. A firestop through penetration device (10) preformed to be installed in a firewall and to create a conduit feedthrough, the device (10) comprising:
- a housing (1) according to one of the preceding claims; and
- a fire seal (11) arranged in the housing (1) and configured to surround penetrants inserted in the channel and to seal the channel, at least in the event of fire, against smoke and/or flames and/or liquids.

10. The firestop through penetration device (10) according to claim 9, which is preformed such as to be readily installed in a firewall, thereby providing a predefined level of insulation protection in case of fire without a need for additional insulation material and/or measures.
